# FASCICULE DE BREVET EUROPEEN

(11) **EP 0 461 968 B1**
(45) Date de publication et mention de la délivrance du brevet: **10.12.1997**
(21) Numéro de dépôt: 91401493.1
(22) Date de dépôt: 07.06.1991
(51) Int. Cl.: G11B 17/04

(54) **Lecteur-enregistreur de cassettes à disque**
Aufzeichnungs- und Wiedergabegerät für Plattenkassetten
Recording-reproducing apparatus for discs

(30) Priorité: 15.06.1990 FR 9007515
(43) Date de publication de la demande: 18.12.1991
(73) Titulaire: ART TECH GIGADISC ATG, 31047 Toulouse (FR)
(72) Inventeur: Rascle, Roger, F-92045 Paris la Défense (FR); Rousseau, Jean-Pierre, F-92045 Paris la Défense (FR)
(74) Mandataire: Ruellan-Lemonnier, Brigitte

(56) Documents cités:
- EP-A- 0 149 532
- EP-A- 0 158 360
- EP-A- 0 250 111
- EP-A- 0 315 256
- EP-A- 0 334 446
- US-A- 3 833 926
- US-A- 4 509 158

## Description

La présente invention concerne un lecteur-enregistreur pour un milieu d'enregistrement de types disques, plus particulièrement pour les disques du type utilisant une cassette constituée par un disque monté à l'intérieur d'une enceinte. De tels lecteurs-enregistreurs trouvent leur application notamment dans le domaine des disques optiques.

Les lecteurs-enregistreurs de disques du type utilisant une cassette pour protéger le disque sont bien connus de l'homme de l'art. Ils sont décrits notamment dans le brevet américain 4 736 356. Ces lecteurs-enregistreurs comportent un mécanisme qui permet de transporter une cassette entre une position haute correspondant à la position d'insertion de la cassette vers une position basse correspondant à la position de lecture et/ou d'enregistrement du disque ou vice et versa. Ainsi la demande de brevet européen N° 0 250 111 montre dans la figure 6 une cassette constituée par une enceinte à l'intérieur de laquelle est monté un disque et un support recevant cette cassette qui peut être déplacé à l'intérieur d'un bâti par l'intermédiaire d'un système du type parallélogramme articulé. La demande de brevet européen N° 0 315 256 contient également la description d'un support relié au bâti par un système de type parallélogramme articulé et muni d'un mécanisme d'entraînement pour déplacer le support entre une position haute et une position basse. La demande de brevet européen N° 0 334 446 divulgue un mécanisme d'entraînement pour déplacer un support de cassette entre une position haute et une position basse, le mécanisme étant du type bielle/manivelle. Les lecteurs-enregistreurs actuellement connus présentent un certain nombre d'inconvénients. Ils ont une vitesse de fonctionnement de plusieurs secondes, une durée de vie insuffisante par rapport au nombre de cycles demandés et le mouvement réalisé lors du transport de la cassette est incompatible avec l'absence de chocs ou d'usure. Or de tels lecteurs-enregistreurs sont de plus en plus souvent associés avec un robot qui translate rapidement la cassette, soit pour la placer dans le logement du mécanisme correspondant à la position haute, soit pour la retirer de cette position, notamment lorsque le lecteur-enregistreur est intégré à une machine appelée "juke-box" en langue anglaise.

La présente invention a donc pour but de proposer un perfectionnement aux moyens de transport de la cassette à l'intérieur du lecteur-enregistreur qui permet de remédier aux inconvénients mentionnés ci-dessus.

La présente invention a aussi pour but de proposer différents perfectionnements au lecteur-enregistreur lui-même qui permettent d'une part de limiter ou de ralentir l'endommagement de la cassette ou de son contenu, d'autre part d'obtenir pour ce mécanisme de transport de cassette un fonctionnement fiable pour une durée de vie de 200 000 à plusieurs millions de cycles.

En conséquence, la présente invention a pour objet un lecteur-enregistreur de disques du type utilisant une cassette constituée par un disque monté à l'intérieur d'une enceinte, ledit lecteur-enregistreur comportant un bâti muni d'une ouverture pour l'insertion de la cassette, des moyens de positionnement de la cassette en position lecture et/ou enregistrement et des moyens de transport de la cassette entre l'ouverture et les moyens de positionnement de la cassette et vice et versa, les moyens de transport de la cassette comportant un support de cassette mécaniquement relié au bâti par l'intermédiaire d'un système de type parallélogramme articulé. Il comporte un mécanisme d'entratnement du support entre l'ouverture et les moyens de positionnement en utilisant un effet de came, ce mécanisme étant dimensionné de telle façon qu'un mouvement sensiblement sinusoïdal du support commence et finit sensiblement sans chocs sur le support. Le mécanisme d'entraînement du support comprend une ouverture formant came réalisée dans le support, dans laquelle peut coulisser un galet fixé au bâti par un élément articulé à celui-ci et entraîné en rotation.

En général, les cassettes pour disques optiques comportent une fenêtre permettant la lecture et/ou l'enregistrement du disque. Pour éviter que des poussières n'entrent dans la cassette lorsque le disque n'est pas utilisé, cette fenêtre est fermée par un volet déplaçable. Dans les lecteurs-enregistreurs de type connu un volet unique ferme les deux fenêtres correspondant aux deux faces du disque. De plus, ce volet est ouvert lors de l'insertion de la cassette dans l'ouverture, soit manuellement, soit par un dispositif automatique extérieur au lecteur-enregistreur, si bien que l'on ne maitrise pas la vitesse d'insertion de la cassette et par suite la rapidité avec laquelle le volet peut se dégrader.

Pour permettre de diminuer l'empoussiérement du disque et selon une autre caractéristique de l'invention deux volets indépendants sont adaptés au lieu d'un volet unique et seul un volet - habituellement le volet inférieur - est ouvert.

Pour éviter une dégradation trop rapide du volet et selon encore une autre caractéristique de l'invention le lecteur-enregistreur comporte de plus un dispositif d'ouverture du volet de cassette actionnant le volet pendant le mouvement de transport de la cassette entre l'ouverture et les moyens de positionnement et bénéficiant du mouvement sensiblement sinusoïdal. De ce fait, selon un mode de réalisation préférentiel, le dispositif d'ouverture de volet de cassette comporte un doigt s'engageant dans l'encoche d'ouverture du volet, le doigt étant fixé sur un levier articulé sur un axe solidaire du support et lié au bâti par une tige rigide articulée entre un axe du bâti et un axe du levier.

Selon encore une autre caractéristique de la présente invention, pour limiter l'empoussièrement, le lecteur-enregistreur comporte, monté en rotation devant l'ouverture, un volet d'obturation dont l'ouverture et la fermeture sont commandées en fonction de la position de la cassette à l'intérieur du lecteur-enregistreur.

Selon une caractéristique supplémentaire de la présente invention, pour éviter les fausses manoeuvres, le volet d'obturation est associé à verrou venant se placer devant l'ouverture lorsqu'une cassette est insérée dans le lecteur-enregistreur.

Selon une autre caractéristique de l'invention, pour limiter l'empoussièrement de l'intérieur de la cassette lorsque celle-ci est en position lecture et/ou enregistrement, le lecteur-enregistreur comporte de plus un joint souple disposé sur le bâti en entourant les moyens de positionnement.

D'autres caractéristiques et avantages de la présente invention apparaîtront à la lecture de la description faite ci-après d'un mode de réalisation préférentiel d'un lecteur-enregistreur de disques conforme à la présente invention, cette description étant faite avec référence aux dessins ci-annexés dans lesquels :
- les figures 1A et 1B sont des vues schématiques illustrant le principe de fonctionnement du mécanisme de transport conforme à la présente invention ;
- la figure 2 est une vue en perspective partielle des principaux éléments d'un lecteur-enregistreur conforme à la présente invention ;
- la figure 3 est une vue de dessus montrant respectivement la cassette et le mécanisme de transport en position haute et en position basse ;
- les figures 4 et 5 sont respectivement des demi-vues de côté en position haute et en position basse ;
- la figure 6 est une vue de dessus représentant plus particulièrement le système de centrage progessif de la cassette, et
- les figures 7 et 8 sont des demi-vues de côté représentant plus particulièrement le volet d'obturation du lecteur-enregistreur et le système extracteur de disque.

Pour simplifier la description, dans les figures les mêmes éléments portent les mêmes références.

Dans la présente invention, il est évident pour l'homme de l'art que par lecteur-enregistreur de disques, on entend aussi bien un simple lecteur que des dispositif réalisant la lecture et l'écriture des disques. Par disque on entend tout type de disque optique comme connu de l'homme de l'art.

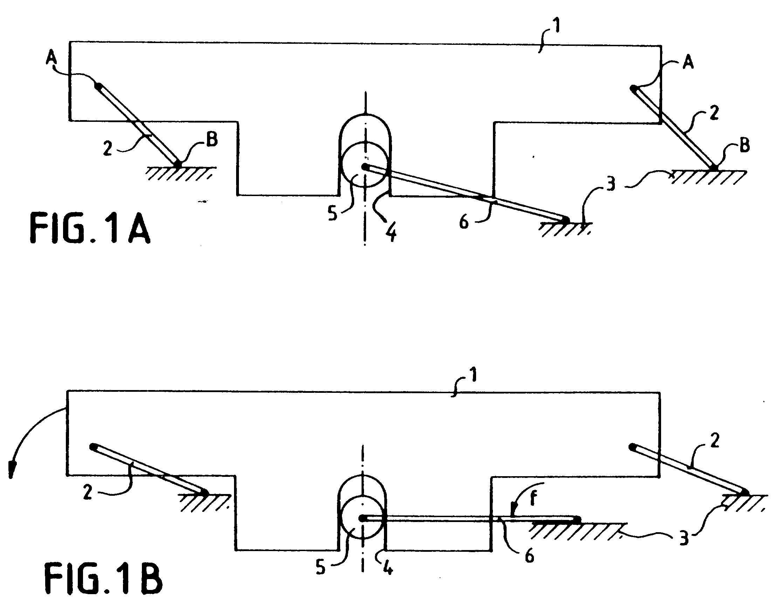

On expliquera tout d'abord, en se référant aux figures 1A et 1B, le principe du mécanisme de transport de cassette conforme à la présente invention. Schématiquement, ce mécanisme comporte un support 1 sur lequel vient se positionner la cassette. Ce support peut comporter un simple plateau ou un ensemble de glissières solidarisées par une plaque raidisseuse, comme cela sera expliqué ci-après. Ce plateau est monté sur quatre biellettes identiques 2. Deux biellettes ont été représentées sur les figures 1A et 1B, les autres biellettes étant fixées sur le côté opposé du support. Les biellettes 2 sont articulées en A sur le support 1 et en B sur le bâti 3 du lecteur-enregistreur. De ce fait on réalise un système du type parallélogramme articulé qui permet de déplacer le support 1 parallèlement à lui-même par un mouvement du type rotation-translation.

Ce mécanisme est associé à un mécanisme d'entraînement du support qui lui permet de suivre un mouvement sensiblement sinusoïdal. Ce mécanisme d'entraînement garantit donc une cinématique sans choc. Comme représenté sur les figures 1A ou 1B, pour obtenir ce mouvement sensiblement sinusoïdal, le support 1 comporte latéralement une ouverture 4 formant came dans laquelle peut coulisser un galet 5 fixé à l'extrémité d'une tige 6 dont l'autre extrémité est articulée sur le bâti 3. Comme représenté plus particulièrement sur la figure 1B, la rotation de la tige 6 selon la flèche f provoque le mouvement du support 1 par l'intermédiaire du galet 5. Par un dimensionnement approprié des différentes parties constituant le système de transport et le mécanisme d'entraînement, le support suit donc un mouvement de type sensiblement sinusoïdal en restant toujours parallèle à lui-même et en particulier arrive à vitesse nulle en position haute, à savoir près de l'ouverture permettant l'insertion de la cassette, dans le mode de réalisation représenté, et en position basse, à savoir au niveau des moyens de positionnement de la cassette en position de lecture et/ou écriture.

La cassette est ainsi transportée sans choc. Comme représenté plus particulièrement sur la figure 1B, lors de l'arrivée du support 1 en position basse, la tige 6 est dimensionnée pour arriver sensiblement horizontalement.

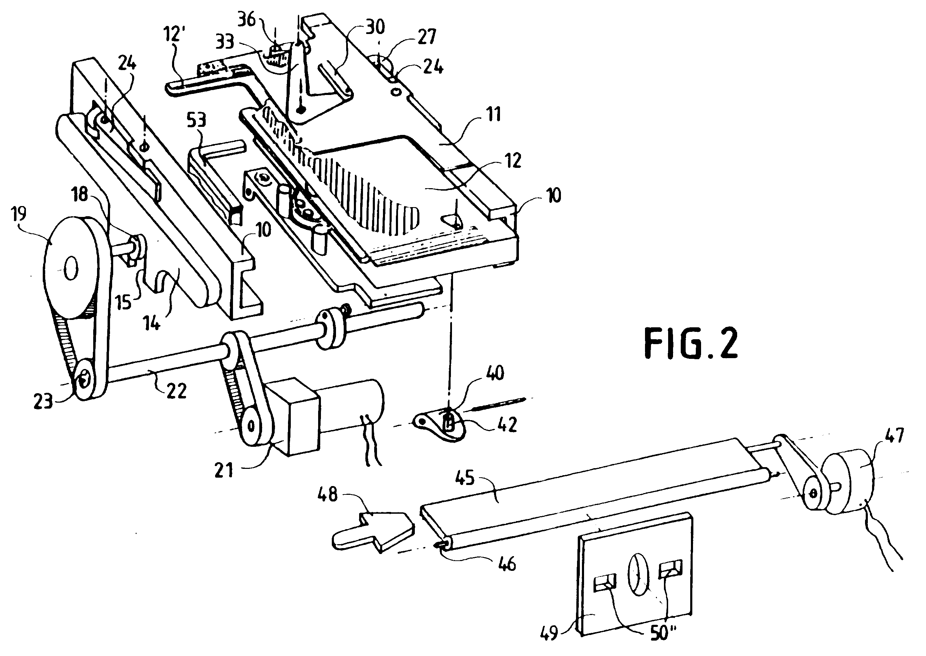

Nous décrirons maintenant avec référence aux figures 2 à 7 un mode de réalisation spécifique d'un lecteur-enregistreur de disque comportant des moyens de transport de la cassette et un mécanisme d'entraînement du support de cassette conforme à la présente invention.

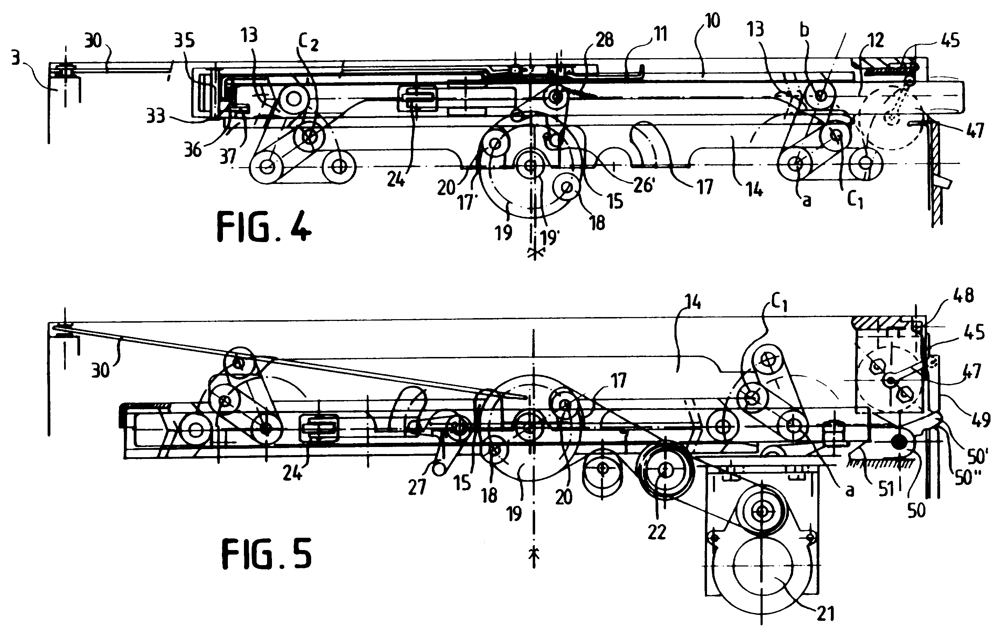

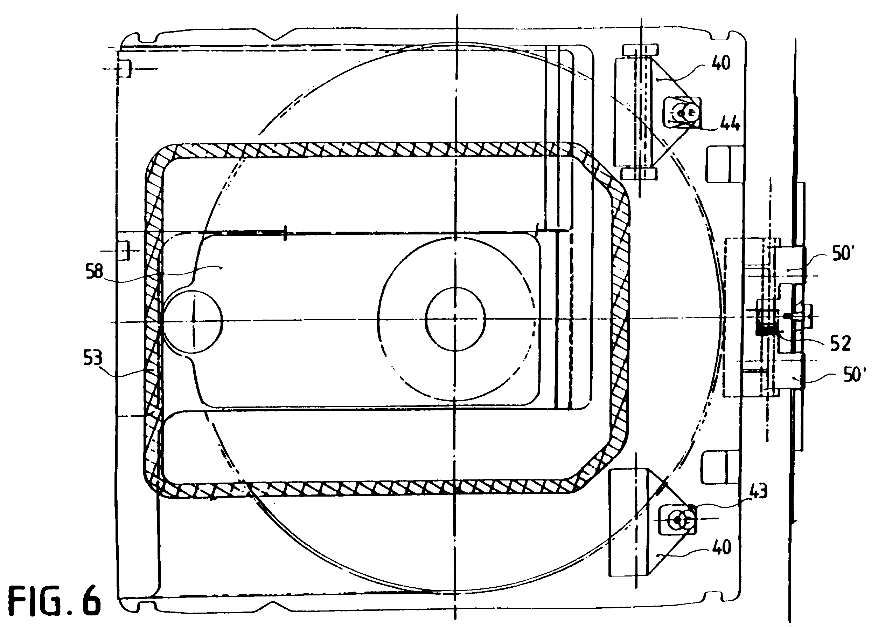

Comme représenté plus particulièrement sur les figures 2, 4 et 5, le support dans le mode de réalisation représenté est constitué par l'assemblage de deux glissières 10 dans lesquelles s'engage la cassette 12 et d'une plaque raidisseuse 11. Quatre biellettes 13 identiques articulées sur le bâti 3 en a et sur les glissières 10 en b, permettent le mouvement du plateau parallèlement à lui-même comme décrit avec référence aux figures 1A et 1B. Le mécanisme d'entraînement du support selon un mouvement sensiblement sinusoïdal est constitué principalement par deux renvois 14 articulés en c₁ et c₂ sur les biellettes 13 de manière à permettre un déplacement des renvois parallèlement à eux-mêmes et parallèlement à l'assemblage glissières et plaque raidisseuse. Pour obtenir un mouvement sensiblement sinusoïdal, les renvois 14 sont munis de différentes ouvertures formant came 15, 17 et 17'. Ces ouvertures coopèrent avec des galets 18, 20 fixés sur une roue 19 entraînée par le système de transmission décrit ci-après. De manière plus spécifique, le mouvement de type sinusoïdal est obtenu par le galet 18 qui vient coulisser dans l'ouverture formant came 15 du dispositif de renvoi. Comme représenté sur la figure 4, le blocage du support, constitué par l'ensemble glissières 10 et plaque raidisseuse 11, en position haute d'une part, à savoir en position d'insertion de la cassette 12, est obtenu lorsque le galet 20 symétrique du galet 18 par rapport à l'axe 19' de la roue 19 vient s'engager dans l'ouverture en arc de cercle 17' réalisée sur le renvoi 14. Dans cette position, lorsque la roue 19 est entraînée en rotation dans le sens de la flèche f, le galet 18 quitte l'ouverture 15 et le galet 20 vient s'insérer dans l'ouverture en arc de cercle formant came 17. Ainsi, comme représenté sur la figure 5, lorsque le galet 20 est complètement inséré dans la came 17, il réalise le verrouillage du mécanisme en position basse.

Comme représenté plus particulièrement sur les figures 2 et 5, le système de transmission est composé essentiellement d'un moteur ou motoréducteur 21 entraînant par un système du type poulie et courroie un arbre 22. Cet arbre 22 transmet également le mouvement aux roues 19 par un système de type poulie et courroie. Comme représenté sur la figure 2, l'arbre 22 peut être muni à son extrémité d'une fente permettant de le manoeuvrer par un tournevis et donc d'assurer le déblocage du système en cas de panne électrique. Dans le mode de réalisation représenté, les glissières 10 peuvent être réalisées en matière plastique ou en métal traité et/ou équipées de rouleaux pour limiter les frottements et l'usure et atteindre la durée de vie prévue.

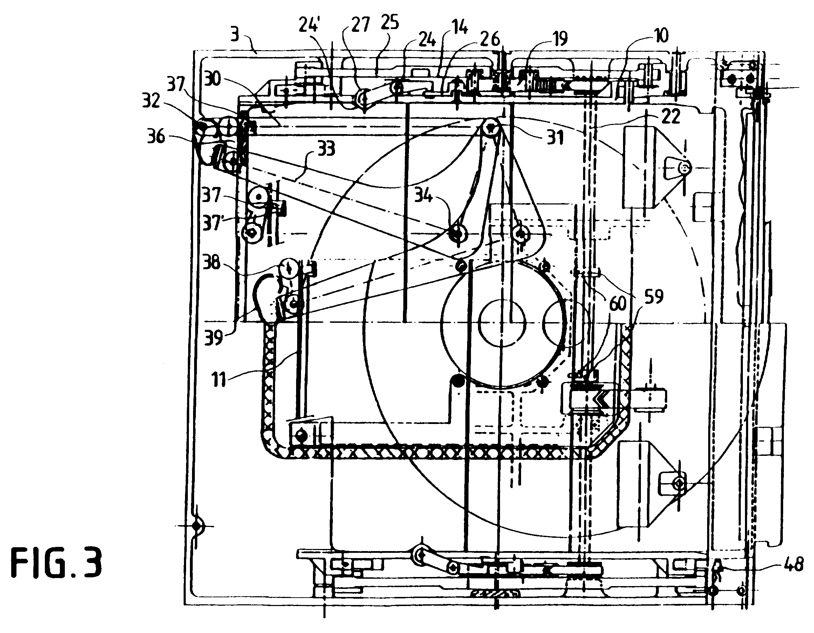

Comme représenté sur les figures 2 à 5, les moyens de transport de la cassette comportent de plus un dispositif de verrouillage de cassette 27 destiné à bloquer la cassette lorsqu'elle est insérée, en position haute ou position d'ouverture, dans les glissières 10 avant le départ de l'ensemble vers la position basse ou position de lecture-enregistrement, dans le mode de réalisation représenté. Ce dispositif de verrouillage 24 permet de bien maintenir la cassette dans la glissière lors de l'accélération du mécanisme d'entraînement du support. Le dispositif de verrouillage 24 est installé des deux côtés sur chaque glissière 10 comme représenté sur la figure 3. Il est constitué essentiellement d'un levier de verrouillage 25 articulé horizontalement par un axe dans la glissière 10. Le levier vient engager une roulette 27 dans une encoche en V 24' prévue sur le côté de la cassette 12. Un verrou 26 articulé verticalement par un axe dans la glissière 10 fait basculer le levier et le maintient en position verrouillage de la cassette. Lorsque le moyen de transport de la cassette est en position haute et en butée, à savoir le galet 20 est en butée au fond de l'ouverture formant came 17, le verrou 26 est maintenu hors blocage du levier par l'intermédiaire d'une goupille 26' fixée sur la roue 19. De ce fait, la cassette peut être insérée ou extraite librement. Dès le début de la rotation de la roue 19 pour l'entraînement des moyens de transport et du mécanisme d'entraînement vers la position basse, ou position de lecture et/ou d'écriture, la goupille 26' vient libérer le verrou qui vient aussitôt par rappel de son ressort 28, bloquer le pivotement du levier et ainsi verrouiller la cassette, comme représenté sur la figure 5. Avec ce dispositif, la cassette n'est déverrouillée qu'au retour de l'ensemble moyen de transport et mécanisme d'entraînement en butée dans la position haute.

On décrira maintenant en se référant plus particulièrement à la figure 3 un mode de réalisation préférentiel d'un dispositif d'ouverture du volet de cassette qui actionne le volet pendant le mouvement de transport de la cassette entre l'ouverture du lecteur-enregistreur en position haute et les moyens de positionnement ou position basse. Comme représenté sur la figure 3, le dispositif d'ouverture comporte essentiellement un levier 33 articulé autour de l'axe 34 sur la plaque raidisseuse 11. Sur l'une des extrémités du levier 33 est montée, autour de l'axe 35, une biellette 36 dont l'autre extrémité comporte un doigt 37 qui vient s'engager dans l'encoche 37' prévue dans le volet de cassette. L'autre extrémité du levier 33 est articulée au niveau de l'axe 31 sur l'extrémité d'une tige rigide 30 dont l'autre extrémité est articulée sur le bâti 3 au niveau de l'axe 32. Ce type d'articulation commande la rotation du levier en fonction du mouvement du support de cassette. Comme représenté sur la figure 3, la biellette 36 comporte aussi un rouleau 38 et un ressort de rappel 39 qui sollicite le rouleau 38 en appui contre la plaque raidisseuse 11. Le rouleau 38 est lié au doigt 37. L'ensemble ressort et rouleau permet le rappel et l'escamotage éventuel du doigt 37 et diminue l'usure au point de contact entre le doigt 37 et la plaque raidisseuse 11 sous l'effet du ressort. D'autre part, sur la figure 3 on a représenté schématiquement trois positions de la partie cassette au niveau de l'encoche de volet montrant le fonctionnement du dispositif d'ouverture du volet de cassette.

Il est évident pour l'homme de l'art que le système décrit ci-dessus a été donné à titre illustratif et qu'en particulier l'ensemble biellette 36, doigt 37, rouleau 38 et ressort 39 peut être remplacé par un autre moyen d'ouverture du volet tel qu'un chariot guidé le long de la plaque raidisseuse en suivant le mouvement du mécanisme d'entraînement du support.

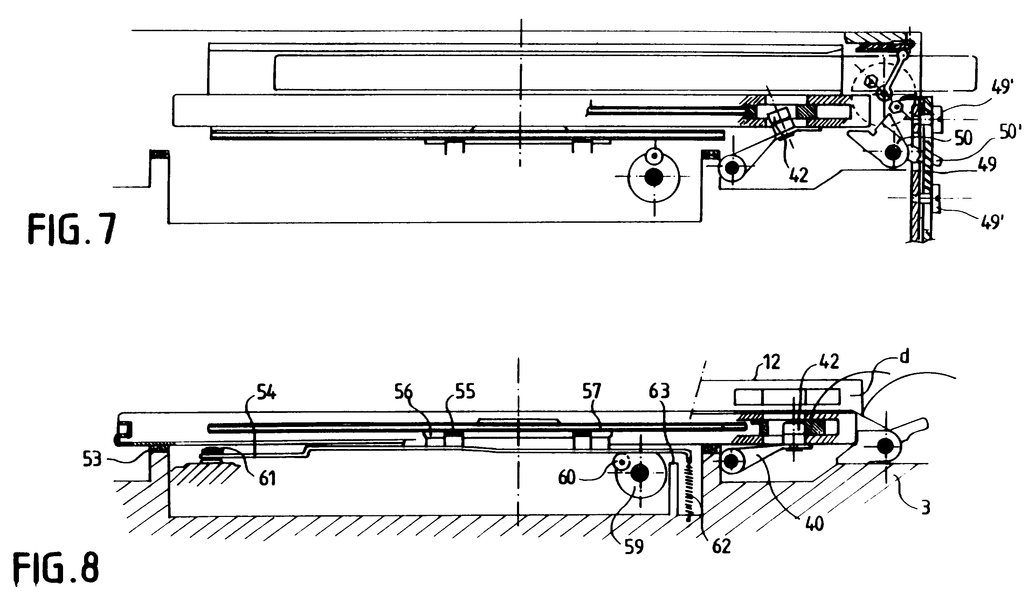

D'autre part, comme représenté sur les figures 2, 6 et 7, le lecteur-enregistreur conforme à la présente invention comporte aussi un système permettant un centrage progressif de la cassette. Ce système comporte des moyens de centrage prévus dans le lecteur-enregistreur et coopérant avec des encoches de forme rectangulaire et triangulaire prévues dans la cassette elle-même. Sur les figures 6 et 8, on a représenté la cassette 12 en position d'approche D. Comme représenté sur les figures 7 et 8, les moyens de centrage progressif 40 du lecteur-enregistreur sont constitués par des pattes montées à rotation et ressort de rappel sur le bâti 3 et comportant à leur extrémité une forme de centrage réalisée, de préférence, par un rouleau 42 pour limiter l'usure. Deux moyens de centrage tels que décrits ci-dessus sont prévus de chaque côté de la partie ouverture du lecteur-enregistreur. Ces moyens de centrage 40 viennent s'engager dans les encoches de la cassette prévues à cet effet. Comme représenté sur la figure 6, les moyens de centrage 40 viennent s'engager respectivement dans une encoche de forme rectangulaire 43 et une encoche de forme triangulaire 44.

D'autre part, comme représenté sur les figures 2, 4, 5, 7 et 8, le lecteur-enregistreur conforme à la présente invention comporte un volet d'obturation de la partie ouverture du lecteur-enregistreur ainsi qu'un dispositif de verrouillage. Le volet d'obturation de l'ouverture est constitué principalement par une plaque 45 montée à rotation autour d'un axe 46. Le volet coopère avec un électro-aimant 47 et un capteur 48. Le volet d'obturation décrit ci-dessus fonctionne de la manière suivante. A l'insertion d'une cassette, le volet 47 initialement vertical, est, par l'introduction de la cassette 12, librement ouvert dans une position proche de l'horizontale. Le capteur 48 détecte alors la présence du volet dans cette position et commande par l'application d'une tension à l'électro-aimant rotatif 47 l'ouverture complète du volet à l'horizontale par rotation du bras de l'électro-aimant comme représenté sur la figure 4. De ce fait, le volet ne frotte plus sur la cassette pendant le reste du mouvement d'insertion ni pendant la descente de la cassette par le mécanisme de transport conforme à la présente invention. La détection, par un capteur non représenté, de l'arrivée de la cassette en position basse, comme représenté sur la figure 5, commande la suppression de la tension appliquée à l'électro-aimant, le relachement du volet 45 et son maintien en position fermée par l'intermédiaire d'un ressort de rappel non représenté.

Dans le mode de réalisation de la présente invention, le volet d'obturation est associé à un verrou qui bloque l'introduction de cassettes dans le lecteur-enregistreur lorsqu'une cassette est déjà placée en position basse. Comme représenté sur les figures 2, 5, 7 et 8, le verrou est constitué par une plaque 49 coulissant verticalement et guidée selon une fente verticale réalisée dans la plaque 49 par deux vis épaulées 49' fixées sur le bâti. Un double prolongement 50' de la butée mobile 50 vient s'engager dans deux encoches 50" de la plaque verrou 49. La butée mobile 50 comporte aussi une extrémité libre 51, présente une forme en L et est maintenue en position par l'intermédiaire d'un ressort 52 comme représenté sur la figure 6. Le fonctionnement du verrou est donc le suivant. En l'absence de cassette dans le lecteur-enregistreur la butée 50, sous l'effet du ressort élastique, est positionnée comme représenté sur la figure 7 et la plaque 49 est dirigée vers le bas. L'ouverture de l'enregistreur-lecteur est ainsi libre pour l'introduction d'une cassette. Lorsque le mécanisme d'entraînement a transporté la cassette en position basse, la cassette vient en appui contre la partie 51 de la butée 50 et la fait basculer vers le bas entraînant dans son mouvement la plaque 49 qui vient dans la position représentée sur la figure 5. Dans cette position, le verrou bloque l'accès d'une autre cassette dans le mécanisme.

Comme représenté sur les figures 2, 3, 6, 7 et 8, le lecteur-enregistreur conforme à la présente invention comporte aussi un système permettant de limiter l'empoussièrement à l'intérieur de la cassette. Ce système est constitué par un joint souple 53 disposé sur le bâti 3 du lecteur-enregistreur. Ce joint souple 53 est placé de manière à s'appliquer à la périphérie de l'ouverture de volet comme représenté clairement sur la figure 6. De ce fait, on crée autour de la fenêtre correspondant à l'ouverture du volet, une enceinte de volume limité qui évite que les poussières ne s'accumulent dans cet endroit et ne soient envoyées par projection sur les pièces internes de la cassette du fait de l'effet de turbine du disque en rotation et surtout de l'apport constant de poussière venant de l'extérieur à cause du renouvellement permanent de l'air qui se produit à travers la fenêtre puisque ce volet est ouvert dans les conditions normales de fonctionnement.

D'autre part, comme représenté plus particulièrement sur les figures 2, 3, et 8, le lecteur-enregistreur comporte aussi un système extracteur de disque. L'extracteur 54 comporte quatre plots 55 destinés à prendre en charge le disque. Ces plots entourent le centreur 56 et accèdent au disque 57 par la fenêtre 58, dans la cassette, laissée libre par le volet de cassette 12' en position ouverte. L'arbre de transmission 22 comporte deux cames 59 équipées de roulements 60 destinées à transmettre les efforts à l'extracteur 54 sans fatiguer d'autres pièces. l'autre extrémité de l'extracteur 54 est articulée sur la bâti 3 par deux vis 61. Deux ressorts 62 maintiennent l'extracteur contre la butée 63 du bâti en l'absence d'action des cames et de leurs roulements 60. Le système extracteur de disque prend donc en charge le disque seul, indépendamment de la cassette, à l'arrivée sur le centreur et au décollement. En effet, le disque logé dans la cassette doit en position basse être posé sur un centreur rotatif entraîné par un moteur. Pour maintenir pendant la rotation le disque sur le centreur, une force magnétique est réalisée entre des aimants du centreur et un anneau métallique du disque. Pour éviter à la cassette et aux pièces du mécanisme de transport de transmettre les efforts dûs à cette force magnétique on utilise donc un système : le système extracteur de disque. Ce système fonctionne sur les quelques millimètres d'entrefer où la force est nettement supérieure aux efforts subis par le mécanisme pendant l'ensemble du mouvement. Le système extracteur de disque ainsi décrit permet d'augmenter la durée de vie du système tout en diminunant les coûts et en renforçant seulement le système d'extraction le plus sollicité.

Les perfectionnements décrits ci-dessus apportés à un enregistreur-lecteur de disque présentent de nombreux avantages. En particulier la cinématique et le système de transmission permettent, d'une part, par la simplicité des mouvements de rotation et, d'autre part, du fait de l'entraînement par roues à galet dans des ouvertures formant came de bénéficier de l'absence de choc et pendant le transport de la cassette et au moment des arrivées ou départs des positions haute et basse. De plus, le mécanisme d'ouverture du volet de cassette de par son principe et son couplage à la cinématique du système de transmission assure une ouverture de volet sûre et fiable. D'autre part, le fonctionnement du volet d'obturation de l'ouverture et du verrou évite l'entrée de plusieurs cassettes et permet de limiter considérablement l'entrée des poussières dans le lecteur-enregistreur.

## Revendications

1. Lecteur-enregistreur de disques du type utilisant une cassette constituée par un disque monté à l'intérieur d'une enceinte, ledit lecteur-enregistreur comportant un bâti muni d'une ouverture pour l'insertion de la cassette, des moyens de positionnement de la cassette en position lecture et/ou enregistrement et des moyens de transport de la cassette entre l'ouverture et les moyens de positionnement de la cassette et vice et versa, les moyens de transport de la cassette comportant
un support (10, 11) de cassette mécaniquement relié au bâti par l'intermédiaire d'un système (13) de type parallélogramme articulé et,
un mécanisme d'entraînement du support (3, 4, 5, 6 ; 14, 15, 17, 17', 18, 19, 20) entre l'ouverture et les moyens de positionnement caractérisé en ce que:
le support suit un mouvement sensiblement sinusoïdal du support commençant et finissant sensiblement sans chocs sur le support, le mécanisme d'entraînement du support (1 ; 10, 11) comprenant une ouverture (4 ; 15) formant came réalisée dans le support, dans laquelle peut coulisser un galet (5 ; 18) fixé au bâti (3) par un élément articulé à celui ci et entraîné en rotation.

2. Lecteur-enregistreur selon la revendication 1, caractérisé en ce que le système de type parallélogramme articulé comporte au moins trois biellettes identiques articulées sur le bâti et, que le support de cassette est constitué par un plateau, ledit plateau étant mécaniquement relié aux biellettes.

3. Lecteur-enregistreur selon la revendication 1, caractérisé en ce que le système de type parallélogramme articulé comporte quatre biellettes (13) articulées sur le bâti et que le support de cassette est constitué par deux glissières (10) latérales solidarisées par une plaque raidisseuse (11), les glissières étant articulées aux quatre biellettes (13) aux extremités des glissières.

4. Lecteur-enregistreur selon l'une quelconque des revendications 1 à 3, caractérisé en ce que le mécanisme d'entraînement est constitué par au moins une tige (6) articulée à une extrémité sur le bâti (3) et portant à son autre extrémité un galet (5) coopérant avec une ouverture (4) formant came réalisée dans le support, la tige étant entraînée en rotation par un système de transmission relié à un moteur.

5. Lecteur-enregistreur selon l'une quelconque des revendications 1 à 3, caractérisé en ce que le mécanisme d'entraînement est constitué par au moins un renvoi (14) articulé sur le support par l'intermédiaire d'au moins deux biellettes, ledit renvoi étant muni de découpes (15, 17, 17') formant came pour au moins un galet (18,20) fixé sur une roue (19) du système de transmission de manière à donner au renvoi un mouvement sinusoïdal.

6. Lecteur-enregistreur selon la revendication 5, caractérisé en ce qu'il comporte de plus un second galet (20) fixé sur la roue et coopérant avec des découpes (17, 17') formant came prévues dans le renvoi de manière à bloquer le mécanisme d'entraînement en position respectivement près de l'ouverture et près des moyens de positionnement.

7. Lecteur-enregistreur selon l'une quelconque des revendications 1 à 6, caractérisé en ce qu'il comporte de plus un dispositif d'ouverture du volet de cassette actionnant le volet pendant le mouvement de transport de la cassette entre l'ouverture et les moyens de positionnement.

8. Lecteur-enregistreur selon la revendication 7, caractérisé en ce que le dispositif d'ouverture comporte un doigt (37) s'engageant dans l'encoche d'ouverture du volet, le doigt étant fixé sur un levier (33) articulé sur un axe (34) solidaire du support et lié au bâti par une tige (30) rigide articulée entre un axe (32) du bâti et un axe du levier.

9. Lecteur-enregistreur selon la revendication 8, caractérisé en ce que le doigt est monté à l'extrémité d'une biellette articulée sur le levier et est sollicité élastiquement en engagement dans l'encoche d'ouverture du volet.

10. Lecteur-enregistreur selon l'une quelconque des revendications 1 à 9, caractérisé en ce qu'il comporte, monté en rotation devant l'ouverture, un volet d'obturation dont l'ouverture et la fermeture sont commandées en fonction de la position de la cassette à l'intérieur du lecteur-enregistreur.

11. Lecteur-enregistreur selon la revendication 10, caractérisé en ce que les moyens de commande de l'ouverture et de la fermeture du volet d'obturation sont constitués par un électro-aimant associé à au moins deux capteurs.

12. Lecteur-enregistreur selon l'une quelconque des revendications 10 et 11, caractérisé en ce que le volet d'obturation est associé à un verrou venant se placer devant l'ouverture lorsqu'une cassette est insérée dans le lecteur-enregistreur.

13. Lecteur-enregistreur selon l'une quelconque des revendications 1 à 12, caractérisé en ce qu'il comporte de plus un joint souple disposé sur le bâti en entourant les moyens de positionnement.

## Patentansprüche

1. Lese-/Schreibvorrichtung für Platten jener Art, die eine aus einer im Innern eines Gehäuses angebrachten Platte bestehende Kassette verwendet, wobei die Lese-/Schreibvorrichtung einen mit einer Öffnung zum Einführen der Kassette ausgebildeten Rahmen, Mittel zur Positionierung der Kassette in die Lese- und/oder Schreibposition und Mittel zur Beförderung der Kassette zwischen der Öffnung und den Mitteln zur Positionierung der Kassette und umgekehrt umfaßt, wobei die Mittel zur Beförderung der Kassette folgendes aufweisen:
einen Kassettenträger (10, 11), der mittels eines Gelenk-Parallelogramm-Systems (13) mechanisch mit dem Rahmen verbunden ist, und
einen Mechanismus (3, 4, 5, 6; 14, 15, 17, 17', 18, 19, 20) zum Antrieb des Trägers zwischen der Öffnung und den Positioniermitteln, dadurch gekennzeichnet, daß der Träger eine im wesentlichen sinusförmige Bewegung des Trägers verfolgt, die im wesentlichen ohne Stöße am Träger beginnt und endet, wobei der Mechanismus zum Antrieb des Trägers (1; 10, 11) eine im Träger ausgebildete, eine Kurve bildende Öffnung (4; 15) enthält, in der eine Rolle (5; 18) gleiten kann, die durch ein Element am Rahmen (3) befestigt ist, das daran angelenkt ist und drehangetrieben wird.

2. Lese-/Schreibvorrichtung nach Anspruch 1, dadurch gekennzeichnet, daß das Gelenk-Parallelogramm-System mindestens drei identische Schwingarme aufweist, die am Rahmen angelenkt sind, und daß der Kassettenträger aus einer Scheibe besteht, die mechanisch mit den Schwingarmen verbunden ist.

3. Lese-/Schreibvorrichtung nach Anspruch 1, dadurch gekennzeichnet, daß das Gelenk-Parallelogramm- System vier Schwingarme (13) aufweist, die am Rahmen angelenkt sind, und daß der Kassettenträger aus zwei Gleitschienen (10) besteht, die durch eine Versteifungstafel (11) seitlich fest verbunden sind, wobei die Gleitschienen an ihren Enden an den vier Schwingarmen (13) angelenkt sind.

4. Lese-/Schreibvorrichtung nach einem der Ansprüche 1 bis 3, dadurch gekennzeichnet, daß der Antriebsmechanismus aus mindestens einer Stange (6) besteht, die an einem Ende am Rahmen (3) angelenkt ist und an ihrem anderen Ende eine Rolle (5) trägt, die mit einer im Träger ausgebildeten, eine Kurve bildenden Öffnung (4) zusammenwirkt, wobei die Stange durch ein mit einem Motor verbundenes Kraftübertragungssystem drehangetrieben wird.

5. Lese-/Schreibvorrichtung nach einem der Ansprüche 1 bis 3, dadurch gekennzeichnet, daß der Antriebsmechanismus aus mindestens einem Vorgelege (14) besteht, das mittels mindestens zweier Schwingarme am Träger angelenkt ist, wobei das Vorgelege mit Ausschnitten (15, 17, 17') versehen ist, die eine Kurve für mindestens eine Rolle (18, 20) bilden, die so an einem Rad (19) des Kraftübertragungsystems befestigt ist, daß dem Vorgelege eine sinusförmige Bewegung verliehen wird.

6. Lese-/Schreibvorrichtung nach Anspruch 5, dadurch gekennzeichnet, daß sie darüber hinaus eine zweite Rolle (20) aufweist, die an dem Rad befestigt ist und mit eine Kurve bildenden Ausschnitten (17, 17') zusammenwirkt, die so im Vorgelege vorgesehen sind, daß der Antriebsmechanismus in der Position nahe der Öffnung bzw. in der Position nahe den Positioniermitteln arretiert wird.

7. Lese-/Schreibvorrichtung nach einem der Ansprüche 1 bis 6, dadurch gekennzeichnet, daß sie darüber hinaus eine Vorrichtung zum Öffnen des Kassettenverschlusses aufweist, die den Verschluß während der Bewegung zur Beförderung der Kassette zwischen der Öffnung und den Positioniermitteln betätigt.

8. Lese-/Schreibvorrichtung nach Anspruch 7, dadurch gekennzeichnet, daß die Öffnungsvorrichtung einen Zapfen (37) aufweist, der in die Kerbe der Verschlußöffnung eingreift und an einem Hebel (33) befestigt ist, welcher an einer fest mit dem Träger verbundenen Achse (34) angelenkt ist und über eine zwischen einer Achse (32) des Rahmens und einer Achse des Hebels angelenkte starre Stange (30) mit dem Rahmen verbunden ist.

9. Lese-/Schreibvorrichtung nach Anspruch 8, dadurch gekennzeichnet, daß der Zapfen an dem Ende eines am Hebel angelenkten Schwingarme angebracht und elastisch in Eingriff in die Kerbe der Verschlußöffnung vorgespannt ist.

10. Lese-/Schreibvorrichtung nach einem der Ansprüche 1 bis 9, dadurch gekennzeichnet, daß sie einen drehbar vor der Öffnung angebrachten Versperrverschluß aufweist, dessen Öffnen und Schließen in Abhängigkeit von der Position der Kassette im Innern der Lese-/Schreibvorrichtung gesteuert wird.

11. Lese-/Schreibvorrichtung nach Anspruch 10, dadurch gekennzeichnet, daß die Mittel zur Steuerung des Öffnens und des Schließens der Versperröffnung aus einem mindestens zwei Fühlern zugeordneten Elektromagneten bestehen.

12. Lese-/Schreibvorrichtung nach Anspruch 10 oder 11, dadurch gekennzeichnet, daß der Versperrverschluß einem Riegel zugeordnet ist, der vor die Öffnung plaziert wird, wenn eine Kassette in die Lese-/Schreibvorrichtung eingeführt ist.

13. Lese-/Schreibvorrichtung nach einem der Ansprüche 1 bis 12, dadurch gekennzeichnet, daß sie darüber hinaus eine elastische Dichtung aufweist, die so am Rahmen angeordnet ist, daß sie die Positioniermittel umgibt.

## Claims

1. Disk record/playback unit of the type using a cassette consisting of a disk mounted inside an enclosure, the said record/playback unit including a frame provided with an opening for inserting the cassette, means for positioning the cassette in the playback and/cr record position and means for transporting the cassette between the opening and the means for positioning the cassette, and vice versa, the means for transporting the cassette including
a cassette support (10, 11) mechanically linked to the frame via a system (13) of the articulated-parallelogram type and,
a mechanism (3, 4, 5, 6; 14, 15, 17, 17', 18, 19, 20) for driving the support between the opening and the positioning means, characterized in that the support follows an approximately sinusoidal movement of the suppcrt [sic], starting and finishing substantially without any shock to the support, the mechanism for driving the support (1; 10, 11) comprising an opening (4; 15) forming a cam which is made in the support, into which opening a roller (5; 18) can slide, this roller being fixed to the frame (3) by an element which is pivoted to the latter and is rotationally driven.

2. Record/playback unit according to Claim 1, characterized in that the articulated-parallelogram-type system includes at least three identical swing-links pivoted to the frame and in that the cassette support consists of a platter, the said platter being mechanically linked to the swing-links.

3. Record/playback unit according to Claim 1, characterized in that the articulated-parallelogram-type system includes four swing-links (13) pivoted to the frame and in that the cassette support consists of two lateral slideways (10) joined together by a stiffening plate (11), the slideways being pivoted to the four swing-links (13) at the ends of the slideways.

4. Record/playback unit according to any one of Claims 1 to 3, characterized in that the drive mechanism consists of at least one rod (6) pivoted at one end to the frame (3) and carrying at its other end a roller (5) which engages in an opening (4) made in the support and forming a cam, the rod being rotationally driven by a drive system connected to a motor.

5. Record/playback unit according to any one of Claims 1 to 3, characterized in that the drive mechanism consists of at least one transfer member (14) pivoted to the support via at least two swing-links, the said transfer member being provided with cut-outs (15, 17, 17') forming a cam for at least one roller (18, 20) fixed to a wheel (19) of the drive system so as to give the transfer member a sinusoidal movement.

6. Record/playback unit according to Claim 5, characterized in that it includes, in addition, a second roller (20) fixed to the wheel and engaging in cut-outs (17, 17') forming a cam which are provided in the transfer member so as to lock the drive mechanism respectively in the position close to the opening and close to the positioning means.

7. Record/playback unit according to any one of Claims 1 to 6, characterized in that it includes, in addition, a device for opening the cassette flap which actuates the flap during the movement whereby the cassette is transported between the opening and the positioning means.

8. Record/playback unit according to Claim 7, characterized in that the opening device includes a finger (37) which engages in the notch for opening the flap, the finger being fixed to a lever (33) pivoted to a pin (34) fastened to the support and linked to the frame via a rigid rod (30) articulated between a pin (32) on the frame and a pin on the lever.

9. Record/playback unit acccrding to Claim 8, characterized in that the finger is mounted on the end of a swing-link pivoted to the lever and is elastically stressed in engagement in the notch for opening the flap.

10. Record/playback unit according to any one of Claims 1 to 9, characterized in that it includes, mounted so as to rotate in front of the opening, a closure flap which is opened and closed depending on the position of the cassette inside the record/playback unit.

11. Record/playback unit according to Claim 10, characterized in that the means for causing the closure flap to open and close consist cf an electromagnet associated with at least two sensors.

12. Record/playback unit according to either of Claims 10 and 11, characterized in that the closure flap is associated with a locking plate which is placed in front of the opening when a cassette is inserted into the record/playback unit.

13. Record/playback unit according to any one of Claims 1 to 12, characterized in that it includes, in addition, a flexible gasket arranged on the frame surrounding the positioning means.
